# EUROPEAN PATENT APPLICATION

(11) **EP 4 850 774 A1**
(43) Date of publication of application: **09.12.2026**
(21) Application number: 26183293.5
(22) Date of filing: 05.06.2026
(51) Int. Cl.: A63B 55/60, B60L 15/38, B62B 5/00

(54) **GOLF BUGGY AND DRIVETRAIN SYSTEM**

(30) Priority: 06.06.2025 AU 2025902284; 24.10.2025 AU 2025905052
(71) Applicant: MGI Golf Pty Ltd, Nunawading, VIC 3131 (AU)
(72) Inventor: EDWARDS-BRITT, Carrie, Victoria, 3131 (AU); ELLIS, Richard, Victoria, 3131 (AU)
(74) Representative: Appleyard Lees IP LLP

(57) **Abstract**

A golf buggy and associated drivetrain system configured to permit powered operation and reduced-resistance manual movement are disclosed. One or more electric motors may remain mechanically coupled to one or more wheels during manual movement while resistance associated with operation of the one or more electric motors is reduced. Reduced resistance may be achieved by operation of a controller, a drive mechanism associated with the one or more electric motors and/or the one or more wheels, or a combination thereof. In some embodiments, the drive mechanism comprises a one-way drive mechanism configured to permit reduced-resistance manual movement without requiring manual disengagement of the one or more electric motors from the one or more wheels.

## Description

### FIELD

The present disclosure relates generally to golf buggies and associated drivetrain systems, and more particularly to systems and methods that facilitate transition between powered operation and manual movement.

### BACKGROUND

Golf buggies have progressed significantly over time. Early designs comprised simple push or pull carts, entirely reliant on user effort. Motorised buggies were later introduced to provide powered drive, reducing physical strain. More recently, advanced features such as remote-control and automated "follow-me" functionality have become available, further reducing the need for direct handling.

Despite these developments, motorised golf buggies typically remain dependent on their drive systems and batteries. When battery charge is depleted, or when the user wishes to push the golf buggy manually (for example, over short distances, in confined areas, or for personal preference), manual operation may be difficult or inefficient due to drivetrain resistance.

Some designs incorporate mechanisms such as levers, pins, or other linkages that can be adjusted to disengage the drive and permit manual rolling. While functional, these approaches add complexity and can be inconvenient in practice, as they require deliberate intervention during play.

Other arrangements employ one-way mechanisms or freewheel systems. However, such systems are often adapted from unrelated technical fields and may not adequately address the practical requirements of golf buggies, including low-speed operation, bidirectional manoeuvrability, lightweight construction, exposure to dirt and moisture, and integration with electronic control systems.

Further, some electric golf buggy drivetrains utilise gear reduction arrangements, including worm gear reducers and related transmission systems, which may resist backdriving when powered drive is not active. In some cases, drivetrain resistance may arise from gearbox characteristics, motor construction, electromagnetic effects, control system behaviour, braking functions, parking brake systems, locking functions, or combinations thereof.

In addition, different operating conditions may impose competing design requirements. For example, it may be desirable for a golf buggy to transmit torque efficiently during powered operation while also permitting low-effort manual movement when the user wishes to push or pull the golf buggy. Achieving both outcomes within a compact and lightweight drivetrain architecture can present practical design challenges.

Golf buggies may also benefit from differing manual movement characteristics in different directions. For example, reduced-resistance manual movement may be desirable in a forward direction, while reverse movement may involve different drivetrain interactions, including backdriving of drivetrain components, energy generation, or other operating behaviours.

Accordingly, there remains a need for golf buggies and drivetrain systems that provide greater ease of transition between powered and manual use, while avoiding unnecessary mechanical complexity and improving user convenience. Improved solutions may also enhance reliability, usability, safety, and overall cost-effectiveness.

It is an aspect of the present disclosure to provide golf buggies and drivetrain systems that offer a useful alternative to existing designs.

The discussion of documents, acts, materials, devices, articles, and the like is included in this specification solely for the purpose of providing context for the present disclosure. It is not suggested or represented that any or all of these matters formed part of the prior art base or were common general knowledge in the field relevant to the present disclosure as it existed before the priority date of each claim of this application.

### SUMMARY

In a first aspect of the present invention, but not necessarily the broadest aspect, there is provided a golf buggy comprising: (a) a frame configured to support golf equipment; (b) at least one wheel coupled to the frame; and (c) one or more electric motors operatively coupled to drive one or more of the at least one wheel, wherein, during manual movement of the golf buggy by a user while the one or more electric motors are unpowered, not actively driving the one or more wheels, or otherwise operating in a manner that permits reduced-resistance manual movement of the golf buggy: (i) resistance associated with operation of the one or more electric motors is reduced so as to allow the golf buggy to be pushed and/or pulled manually with reduced resistance, the reduced resistance being achieved by: (aa) operation of a controller configured to control the one or more electric motors; (bb) a drive mechanism associated with the one or more electric motors and/or the one or more wheels; or (cc) a combination thereof; and (ii) manual disengagement of the one or more electric motors from the one or more wheels is not required.

In some embodiments of the first aspect of the invention, the controller reduces resistive torque by placing the one or more electric motors in a low-resistance electrical state.

In certain embodiments of the first aspect of the invention, the low-resistance electrical state comprises electrically decoupling the windings of the one or more electric motors.

In some embodiments of the first aspect of the invention, the controller reduces resistive torque by disabling and/or mitigating holding torque, braking torque, parking brake functionality, electronic park brake functionality, phase-locking resistance, electromagnetic locking functionality, or combinations thereof.

In some embodiments of the first aspect of the invention, during manual movement, the controller ceases supplying current to the one or more electric motors such that the controller does not apply drive torque, holding torque or braking torque.

In some embodiments of the first aspect of the invention, the controller detects manual movement of the golf buggy and automatically transitions the one or more electric motors into the manual-movement mode.

In some embodiments of the first aspect of the invention, manual movement in a first direction permits overrunning of at least part of the drivetrain and manual movement in a second direction backdrives at least part of the drivetrain.

In some embodiments of the first aspect of the invention, the controller detects manual movement based on one or more of: (a) rotation of the one or more wheels; (b) rotational speed of the one or more electric motors; (c) back-EMF generated by the one or more electric motors; (d) a force applied to the golf buggy; (e) torque and/or strain within the golf buggy; or (f) signals from one or more motion, force and/or inertial sensors.

In some embodiments of the first aspect of the invention, the one or more motion, force and/or inertial sensors comprise one or more accelerometers, gyroscopes, inertial measurement units (IMUs), force sensors and/or strain sensors.

In some embodiments of the first aspect of the invention, (a) manual movement of the golf buggy in a first direction permits overrunning of at least part of the drive mechanism with reduced backdriving of the one or more electric motors; and (b) manual movement in a second direction and/or engagement state backdrives the one or more electric motors.

In some embodiments of the first aspect of the invention, electrical energy generated by backdriving the one or more electric motors during manual movement in the second direction is directed to charge an energy storage device when one or more charging conditions are satisfied.

In certain embodiments of the first aspect of the invention, the one or more charging conditions comprise generated voltage exceeding a voltage of the energy storage device and/or generated current satisfying a charging threshold.

In some embodiments of the first aspect of the invention, electrical energy generation occurs during manual movement of the golf buggy in the second direction and/or during an engagement state that backdrives the one or more electric motors.

In some embodiments of the first aspect of the invention, the golf buggy further comprises a parking brake, optionally comprising a manually operable parking brake and/or an electronic park brake, and wherein, upon receipt of a STOP command, the controller: (a) cuts torque produced by the one or more electric motors to zero; (b) places the one or more electric motors in the manual-movement mode; (c) controls operation of the parking brake and/or coordinates operation with the parking brake; or (d) performs any combination of (a) to (c).

In some embodiments of the first aspect of the invention, the golf buggy comprises a user-selectable manual-movement mode.

In some embodiments of the first aspect of the invention, the manual-movement mode is selectable electronically and/or mechanically.

In some embodiments of the first aspect of the invention, the manual-movement mode is selectable by: (a) a button or switch; (b) a controller mode; (c) a wheel engagement position; (d) a freewheel position; (e) a clutch engagement arrangement; (f) a parking brake actuator and/or parking brake release arrangement; or (g) combinations thereof.

In some embodiments of the first aspect of the invention, the drive mechanism comprises a one-way drive mechanism associated with the one or more electric motors and/or the one or more wheels.

In some embodiments of the first aspect of the invention, the one-way drive mechanism is integrated with, positioned within, or adjacent to a wheel hub, drivetrain, transmission, and/or in-hub motor arrangement.

In some embodiments of the first aspect of the invention, the one-way drive mechanism comprises one or more one-way drive mechanisms positioned within one or more rear wheel hubs.

In some embodiments of the first aspect of the invention, the one or more one-way drive mechanisms comprise respective one-way drive mechanisms positioned within left and right rear wheel hubs.

In some embodiments of the first aspect of the invention, the one-way drive mechanism comprises: (a) a one-way needle bearing clutch; (b) a sprag clutch; (c) a roller clutch; (d) a wrap-spring clutch; (e) a torsion spring clutch; (f) a ratchet mechanism; (g) a freewheel mechanism; (h) an overrunning mechanism; or (i) combinations thereof.

In some embodiments of the first aspect of the invention, the one-way drive mechanism automatically transitions between engagement and overrunning states without user intervention.

In some embodiments of the first aspect of the invention, reduced resistance during manual movement is achieved substantially entirely by the one-way drive mechanism or is achieved by operation of the one-way drive mechanism and operation of the controller.

In some embodiments of the first aspect of the invention, reduced resistance during manual movement is achieved: (a) without use of a one-way drive mechanism; or (b) substantially entirely by controller operation.

In some embodiments of the first aspect of the invention, manual movement of the golf buggy generates electrical energy that powers an auxiliary component.

In some embodiments of the first aspect of the invention, a single electric motor drives a plurality of wheels through a shared axle, gearbox and/or transmission arrangement.

In some embodiments of the first aspect of the invention, the gearbox comprises a worm gear and worm wheel arrangement.

In certain embodiments of the first aspect of the invention, the worm gear and worm wheel arrangement comprises a dual-start or multi-start worm.

In particular embodiments of the first aspect of the invention, the gearbox has a reduction ratio of about 15:1 to about 40:1, optionally about 20:1 to about 30:1, further optionally about 25:1.

In some embodiments of the first aspect of the invention, the auxiliary component comprises an indicator light, display, communication module, sensor, control circuitry, or combinations thereof.

In some embodiments of the first aspect of the invention, the auxiliary component comprises one or more wireless communication modules, transceivers, positioning modules, processors, microcontrollers, sensors, control electronics, or combinations thereof.

In some embodiments of the first aspect of the invention, the one or more electric motors remain electrically connected to the controller and/or a power source during the manual-movement mode.

In some embodiments of the first aspect of the invention, the one or more electric motors comprise: (a) one or more hub motors; (b) one or more brushless motors; or (c) one or more permanent magnet motors, including one or more brushless permanent magnet motors; and/or (d) combinations thereof.

In a second aspect of the invention, there is provided a method of operating a golf buggy comprising one or more electric motors operatively coupled to drive one or more wheels, the method comprising: (a) driving the one or more wheels using the one or more electric motors during a powered operating mode; and (b) during manual movement of the golf buggy, reducing resistance associated with operation of the one or more electric motors while the one or more electric motors remain mechanically coupled to the one or more wheels, thereby allowing the golf buggy to be pushed and/or pulled manually with reduced resistance, wherein the reduced resistance is achieved by: (aa) operation of a controller configured to control the one or more electric motors; (bb) a drive mechanism associated with the one or more electric motors and/or the one or more wheels; or (cc) a combination thereof.

In some embodiments of the second aspect of the invention, (a) manual movement in a first direction permits overrunning of at least part of the drive mechanism with reduced backdriving of the one or more electric motors; and (b) manual movement in a second direction and/or engagement state backdrives the one or more electric motors.

In a third aspect of the present invention, there is provided a drivetrain system for a golf buggy, the system comprising: (a) one or more electric motors configured to drive one or more wheels of the golf buggy; (b) a controller configured to control operation of the one or more electric motors; and (c) a drive mechanism associated with the one or more electric motors and the one or more wheels, wherein the controller and/or the drive mechanism are configured to implement a manual-movement mode in which: (i) the one or more electric motors remain mechanically coupled to the one or more wheels; and (ii) resistance associated with operation of the one or more electric motors is reduced during manual movement of the golf buggy.

In some embodiments of the third aspect of the invention, the drive mechanism comprises a one-way drive mechanism.

In some embodiments of the third aspect of the invention, the one-way drive mechanism comprises: (a) a one-way needle bearing clutch; (b) a sprag clutch; (c) a roller clutch; (d) a wrap-spring clutch; (e) a torsion spring clutch; (f) a ratchet mechanism; (g) a freewheel mechanism; (h) an overrunning mechanism; or (i) combinations thereof.

In some embodiments of the third aspect of the invention, the drivetrain system further comprises a manually operable parking brake configured to selectively resist movement of the golf buggy, wherein the manually operable parking brake is releasable to permit manual pushing and/or pulling of the golf buggy.

In some embodiments of the third aspect of the invention, (a) the one or more electric motors comprise one or more hub motors, one or more brushless motors, one or more permanent magnet motors, including one or more brushless permanent magnet motors, and/or combinations thereof; and (b) respective driven wheels comprise respective one-way drive mechanisms associated with the respective driven wheels and/or the one or more electric motors.

In some embodiments of the third aspect of the invention, the respective driven wheels comprise left and right rear driven wheels, and wherein the respective one-way drive mechanisms are associated with the left and right rear driven wheels.

In some embodiments of the third aspect of the invention, the respective one-way drive mechanisms comprise left-side and right-side one-way drive mechanisms having different installation orientations.

In other embodiments of the third aspect of the invention, the respective one-way drive mechanisms are configured to be installed interchangeably on the left and right rear driven wheels.

### DETAILED DESCRIPTION AND EMBODIMENTS

For clarity, certain terms used in this description are defined below. These definitions are provided to assist understanding of the disclosure and are not intended to be limiting.

Throughout the description and claims, the term "comprises," and variations thereof, are used in an inclusive sense and are not intended to exclude other components, features, or steps.

Reference to "one embodiment" or "an embodiment" means that a particular feature, structure, or characteristic described in connection with the embodiment is included in at least one embodiment. Appearances of the phrases "in one embodiment" or "in an embodiment" are not necessarily all referring to the same embodiment.

The singular forms "a," "an," and "the" are intended to include the plural forms as well, unless the context clearly indicates otherwise.

The term "about" is intended to account for normal variations in measurement or manufacturing tolerances. Unless otherwise indicated, the term "about" refers to a value including the stated value as well as variations of ±10%, or variations that would be understood as insubstantial by a person skilled in the art.

The term "and/or" means one or the other or both. For example, "A and/or B" encompasses "A alone," "B alone," and "both A and B together." Unless otherwise indicated, the term "or" is used in the inclusive sense.

The term "user" refers to a person such as a golfer or caddy who operates, directs, or otherwise interacts with a golf buggy. The terms 'user', 'golfer', and 'caddy' may be used interchangeably where appropriate. In some embodiments, the intended user may comprise a younger demographic of golfers who prefer to walk the course but benefit from powered assistance during hilly terrain, toward the end of a round, or at any other desired time.

The phrase "manual-movement mode" refers broadly to a state in which the golf buggy is manually movable with reduced resistance. The reduction in resistance may be associated with one or more electric motors, a drivetrain, a drive mechanism, a wheel coupling arrangement, a controller operating state, or combinations thereof. The manual-movement mode may be implemented electronically, mechanically, electromechanically, or by combinations thereof.

The term "engagement state" refers to a state of engagement or disengagement of one or more drivetrain components, including clutches, one-way drive mechanisms, freewheel mechanisms, overrunning mechanisms, transmissions, parking brake systems, wheel coupling arrangements and/or controller-controlled operating states. Different engagement states may exhibit different resistance characteristics during manual movement.

The term "controller" refers to any circuit, processor, or control unit configured to control operation of a power source or drivetrain element. A controller may include discrete circuitry, a microprocessor, an electronic control unit (ECU), firmware, or combinations thereof, and may be configured to receive inputs and provide outputs to control engagement, disengagement, torque, braking, locking, or parking functions. In some implementations, the controller contributes to reduced-resistance manual movement by actively controlling motor behaviour. In other implementations, the controller may be substantially passive during manual movement and may simply cease supplying current to the motor without actively applying drive torque, braking torque, holding torque or locking torque.

Reduced-resistance manual movement is not limited to circumstances in which the one or more electric motors are completely unpowered. In some implementations, the one or more electric motors may remain energised during manual movement while operating in a manner that facilitates manual movement of the golf buggy. By way of example, the one or more electric motors may operate in a low-torque mode, drag-reduction mode, torque-compensation mode, manual-assist mode, resistance-reduction mode, freewheel-support mode, or another operating mode configured to reduce resistance associated with manual movement.

In such implementations, the one or more electric motors may generate little or no propulsive torque, may generate a compensating torque, or may otherwise operate so as to reduce the effects of drivetrain losses, gearbox losses, bearing losses, cogging torque, electromagnetic resistance and/or other sources of resistance. Accordingly, reduced-resistance manual movement may occur while the one or more electric motors are unpowered, not actively driving the one or more wheels, or otherwise operating in a manner that permits reduced-resistance manual movement of the golf buggy.

The term "one-way drive mechanism" refers to a device or arrangement that transmits torque in one operating condition, rotational direction and/or engagement state while permitting reduced-resistance rotation, freewheeling, overrunning and/or reduced backdriving in another operating condition, rotational direction and/or engagement state. The terms "one-way drive mechanism", "freewheel mechanism", "overrunning mechanism", "overrunning clutch" and similar terminology may be used interchangeably where appropriate. Operation of a one-way drive mechanism need not be strictly direction-dependent and may depend on drivetrain state, wheel speed, motor state, controller state, clutch state, parking brake state, load condition and/or other drivetrain conditions.

The term "STOP command" refers to any input, whether from a user interface, remote control, sensor system, or software instruction, which directs the controller to stop powered drive of the golf buggy.

The term "backdrivable", when used in relation to a motor or drivetrain, refers to a configuration in which torque applied externally at the wheel is able to cause rotation of the motor or drivetrain when the motor is unpowered, such that the golf buggy can be moved manually. Backdrivability may be achieved by mechanical design and/or by electronic control that reduces or disables resistive torque. Backdriving need not occur during all manual movement. In some implementations, manual movement in a first direction permits overrunning or freewheeling with little or no backdriving of the motor, while manual movement in a second direction backdrives at least part of the drivetrain and optionally the motor.

The present disclosure is predicated at least in part on the inventors' recognition that existing golf buggy systems often fail to provide seamless transition between powered operation and manual movement. In many cases, the drivetrain and/or gearbox create significant drag when the motor is unpowered, making manual pushing or pulling difficult.

In addition, some electric motors and associated control systems incorporate electromagnetic locking functions, braking functionality, holding torque, parking brake systems, or phase-locking behaviour that further resist wheel rotation when powered drive is not active.

Existing systems that require mechanical disengagement arrangements, such as levers, pins, or linkages, can be inconvenient, mechanically complex, and undesirable from a user experience perspective.

One-way drive mechanisms are known in other technical fields. However, adapting such mechanisms for golf buggy operation presents unique design challenges, including lightweight packaging constraints, operation under low-torque manual movement conditions, exposure to dirt and moisture, bidirectional manoeuvrability requirements, and integration with electronic drive systems.

To address these issues, the present disclosure provides golf buggy drivetrain arrangements configured to permit transition between powered drive operation and manual movement without requiring manual disengagement of the motor from the wheel. In some implementations, the transition occurs without requiring operation of a release lever, disengagement pin, clutch release mechanism or similar user-actuated drivetrain disconnect arrangement.

Reduced-resistance manual movement may be implemented in different ways depending on the desired drivetrain behaviour, manufacturing considerations, packaging constraints, cost targets, and intended user experience. The present disclosure is not limited to a single mechanism for achieving reduced resistance. Rather, the reduction in resistance may be achieved through electronic control of the motor, through mechanical drivetrain architecture, or through a combination of electronic and mechanical arrangements. This provides flexibility to protect both the presently contemplated commercial implementation and future versions that may use different drivetrain components or control strategies. For example, electronic control may include passive non-interference by the controller, active reduction of resistive motor effects, low-torque assistance, drag compensation, torque compensation, or other control strategies that facilitate manual movement.

Three broad classes of implementation are contemplated. In a first class, reduced-resistance manual movement is achieved predominantly through controller operation. In a second class, reduced-resistance manual movement is achieved predominantly through drivetrain architecture, including operation of one or more one-way drive mechanisms, freewheel mechanisms and/or overrunning arrangements. In a third class, controller operation and drivetrain architecture cooperate to achieve the desired manual-movement characteristics. The present disclosure is intended to encompass all such approaches.

One presently contemplated commercial implementation falls primarily within the second class. In such implementations, low-resistance manual movement may arise predominantly from operation of a one-way drive mechanism while controller involvement is limited, passive and/or incidental.

In some embodiments, the one-way drive mechanism may be integrated with, positioned within, or positioned adjacent to a wheel hub arrangement, transmission, gearbox, axle assembly, motor assembly or other drivetrain component.

In some embodiments, the golf buggy may comprise one or more electric motors associated with one or more driven wheels. The one or more electric motors may comprise hub motors, brushless motors, permanent magnet motors, brushless permanent magnet motors, direct-drive motors, inrunner motors, outrunner motors, or combinations thereof.

The one-way drive mechanism may comprise any suitable overrunning, freewheel, sprag, clutch, ratchet, or unidirectional drive arrangement. Such mechanisms may be integrated into a wheel hub, associated with a wheel hub, incorporated into a transmission stage, associated with an axle, incorporated into a gearbox, associated with a motor shaft, or positioned elsewhere within the drivetrain.

In one class of implementations, resistance is reduced mechanically by a one-way drive mechanism associated with one or more electric motors and/or one or more wheels. In such arrangements, the one-way drive mechanism may permit torque transmission from the one or more electric motors to the one or more wheels to overrun, freewheel, or rotate with reduced resistance during manual movement. This may be useful where a simple and robust mechanical arrangement is desired, or where it is desirable to reduce reliance on active controller intervention during manual movement.

In another class of implementations, resistance associated with operation of one or more electric motors is reduced by controller operation. This approach can be commercially attractive where the motor and wheel remain mechanically coupled during manual movement, because the user is not required to operate a separate release lever, pin, or mechanical disengagement linkage. Instead, the controller can place the one or more electric motors and associated drive electronics into a state in which the electric motor contributes little or reduced resistance to manual movement of the golf buggy.

In some implementations, manual forward movement permits one or more wheels to overrun relative to at least part of the drivetrain such that one or more of the axle, gearbox, transmission components and electric motor are not substantially backdriven.

This behaviour may permit the golf buggy to exhibit manual pushing characteristics similar to those of a conventional non-powered pushcart while remaining immediately available for powered operation.

In some implementations, manual movement in a reverse direction may produce different drivetrain behaviour. For example, reverse movement may backdrive one or more drivetrain components including one or more wheels, axles, gearboxes, transmissions and/or electric motors.

The inventors have recognised that asymmetrical forward and reverse manual movement characteristics may provide practical advantages in golf buggy applications.

Hybrid electro-mechanical arrangements may also be used. For example, a one-way drive mechanism may mechanically reduce transmission of resistive torque from the motor or gearbox to the wheel, while the controller simultaneously reduces electromagnetic resistance generated by the motor. Such arrangements may improve the feel of transition between powered and manual operation, reduce perceived drivetrain drag, improve user control, and allow the drivetrain to be tuned for different terrain or product versions.

In some embodiments, reduced-resistance manual movement may be achieved substantially entirely through mechanical drivetrain architecture, including operation of one or more one-way drive mechanisms, without active controller-based resistance reduction.

This flexibility is particularly useful because the preferred implementation may vary between product generations. A lower-cost version may rely more heavily on mechanical freewheel behaviour, while a more advanced version may use controller-managed motor behaviour, parking brake control, regenerative charging, remote-control functions, or follow-me functionality. The disclosure therefore describes controller-based architectures, drivetrain-based architectures and hybrid architectures, each of which may be commercially preferred depending on product design objectives.

Directionality of reduced-resistance manual movement may also vary. In some drivetrain configurations, the golf buggy may move with reduced resistance in a forward direction only. In other configurations, reduced-resistance movement may be provided in either or both of forward and reverse directions. Directional behaviour may be influenced by the orientation of a one-way drive mechanism, the motor type, gearbox configuration, controller settings, engagement state, parking brake behaviour, and whether regeneration is desired.

In some implementations, reduced-resistance manual movement is achieved primarily during forward pushing while reverse movement involves greater drivetrain resistance.

In some implementations, forward manual movement permits wheel overrunning without substantial rotation of one or more axles, gearboxes, transmissions and/or electric motors.

In some implementations, reverse manual movement backdrives one or more drivetrain components and may optionally generate electrical energy.

In some implementations, manual forward movement permits one or more wheels to freewheel or overrun such that the wheel movement is substantially decoupled from one or more axles, gearboxes, transmissions and/or electric motors. In contrast, manual reverse movement may engage at least part of the drivetrain and thereby backdrive one or more axles, gearboxes, transmissions and/or electric motors.

Reduced resistance need not be the same in all directions of manual movement. In some implementations, manual movement in a first direction may occur with lower resistance than manual movement in a second direction. For example, forward manual movement may permit one or more wheels to overrun or freewheel with reduced backdriving, while reverse manual movement may backdrive at least part of the drivetrain and/or one or more electric motors and therefore exhibit greater resistance. Reverse manual movement may nevertheless exhibit reduced resistance relative to other powered golf buggy drivetrain arrangements.

In some embodiments, reduced-resistance manual movement may be achieved substantially entirely through controller operation without use of a one-way drive mechanism. In such implementations, forward and reverse manual movement may have the same or different resistance characteristics depending on controller settings, motor type, gearbox configuration and braking or locking behaviour.

The ability to provide reverse manual movement with reduced resistance may be particularly useful in confined areas, during loading or unloading, when positioning the golf buggy around obstacles, or when moving the golf buggy over short distances without powered assistance. This may overcome a practical limitation of systems that roll forward relatively easily but resist backward movement because of drivetrain drag, gearing, clutch orientation, or motor locking behaviour.

The golf buggy generally comprises a frame configured to support golf equipment together with a plurality of wheels coupled to the frame. The frame may support a golf bag, accessories, battery pack, controller housing, user interface and drivetrain components. The golf buggy may include two, three, four or more wheels depending on the desired stability, manoeuvrability, folding configuration, weight and intended user experience.

Different drivetrain architectures may be used to achieve the reduced-resistance manual movement described herein. Selection of motor type, gearbox arrangement, clutch mechanism, controller strategy and user interface may be influenced by competing design considerations including torque output, drivetrain efficiency, cost, weight, noise, ingress protection, reliability, serviceability and packaging within a compact golf buggy chassis.

In some embodiments, the golf buggy may include a single electric motor configured to drive one or more wheels. In one implementation, a single brushless permanent magnet motor drives a plurality of wheels through a shared axle, gearbox, transmission and/or other common drive arrangement. Such arrangements may reduce component count, simplify control and provide a compact drivetrain architecture.

In other embodiments, the golf buggy may include a plurality of electric motors. For example, respective electric motors may be associated with respective driven wheels of the golf buggy. The respective motors may operate independently, cooperatively, differentially, or in any suitable combination.

The disclosure intentionally encompasses single-motor, dual-motor and multi-motor architectures. One or more electric motors may comprise hub motors, non-hub motors, direct-drive motors, geared motors, brushless motors, permanent magnet motors, brushless permanent magnet motors, inrunner motors, outrunner motors, or combinations thereof.

The controller may be configured to control operation of the one or more electric motors collectively and/or independently.

During manual movement of the golf buggy while the one or more electric motors are unpowered, not actively driving the wheels, or otherwise operating in a manner that permits reduced-resistance manual movement, the controller may operate to reduce resistance associated with one or more of the electric motors, including in embodiments comprising multiple motors and/or hub motors, such that manual disengagement of the motor drive arrangement is not required.

In some embodiments, the controller may place one or more electric motors into a reduced-resistance, coast, passive and/or freewheel operating state during manual movement of the golf buggy.

In other embodiments, the controller may implement a coast mode in which torque generation and/or resistive torque associated with the one or more electric motors is reduced during manual movement of the golf buggy.

In some implementations, the controller contributes to reduced-resistance manual movement by ceasing supply of current to the one or more electric motors.

In such implementations, the controller may be substantially passive during manual movement and may neither actively drive the motor nor actively apply braking torque, holding torque, parking brake torque, locking torque or electromagnetic resistance.

In some implementations, the controller contributes to reduced-resistance manual movement principally by avoiding introduction of additional resistance into the drivetrain. Accordingly, reduced-resistance manual movement may arise predominantly from drivetrain architecture while the controller remains substantially passive.

Reduced-resistance manual movement may also occur while the one or more electric motors remain energised. In such cases, the controller may operate the one or more electric motors in a low-torque, drag-reduction, torque-compensation, manual-assist, resistance-reduction or freewheel-support mode. Such modes may reduce the effort required for manual movement without necessarily providing powered drive in the ordinary sense.

For example, the controller may command a small compensating torque to offset drivetrain losses, gearbox losses, bearing losses, cogging torque, electromagnetic resistance and/or other resistive effects. In other examples, the controller may control motor phase states, current flow or motor drive electronics so that the motor remains connected or energised but contributes reduced resistance during manual movement.

The electric motor may comprise a brushless motor, a permanent magnet motor, a brushless permanent magnet motor, a brushless DC motor, a three-phase AC motor, an inrunner motor, an outrunner motor, a hub motor, or any suitable combination thereof. A brushless DC inrunner motor may be suitable where compact packaging, efficiency and controllability are important. A hub motor may be useful where integration of the motor into the wheel assembly reduces drivetrain complexity. Permanent magnet motors may include surface-mounted permanent magnet motors, interior permanent magnet motors, synchronous permanent magnet motors, brushless AC permanent magnet motors and/or brushless DC permanent magnet motors.

The motor may drive the wheel through a gearbox or other transmission arrangement. Suitable transmission arrangements may include spur gears, helical gears, bevel gears, planetary gears, worm gears, belt drives, chain drives, direct drives, hub motor arrangements, or combinations thereof. These arrangements may be selected based on required torque multiplication, desired speed range, packaging, noise, cost and desired backdrivability.

In one practical implementation, the motor drives the wheel through a gearbox comprising a worm gear and worm wheel arrangement. A worm gear arrangement may provide high torque multiplication in a compact package, which is useful for low-speed golf buggy operation. The worm gear reducer may have a reduction ratio in the range of about 20:1 to 30:1, including about 25:1. However, worm gear arrangements can sometimes resist backdriving, and for that reason may benefit from controller strategies that reduce motor-generated resistance and/or from mechanical arrangements that selectively reduce transmission of resistance to the wheel. In one implementation, the gearbox comprises a worm gear reducer having a reduction ratio of approximately 25:1 and a dual-start or multi-start worm.

A dual-start worm configuration may provide improved efficiency and backdrivability compared with an equivalent single-start worm configuration.

In some embodiments, a worm reduction ratio of approximately 25:1 is employed, although higher and lower ratios may also be used.

Reduction ratios in the range of about 20:1 to about 30:1 may provide a useful balance between torque multiplication, efficiency, packaging constraints and manual-movement characteristics.

A multi-start worm may be used to improve efficiency and backdrivability relative to a single-start worm while maintaining useful torque transmission characteristics. The number of starts may be selected to balance efficiency, holding capability, torque capacity, manufacturability and manual-movement feel. This provides a useful fallback where the drivetrain uses a worm gear but is still intended to permit manual movement with reduced resistance.

In some embodiments, the worm gear reducer comprises a reduction ratio of about 15:1 to about 40:1, including about 20:1, about 25:1, about 30:1 or values therebetween. Reduction ratios outside these ranges may also be used.

In some implementations, the drivetrain is backdrivable in one direction or engagement state and substantially non-backdrivable, less backdrivable or decoupled in another direction or engagement state. Backdrivability may therefore be asymmetric.

The drivetrain may be configured to be backdrivable such that force applied by a user at the wheel causes rotation of at least part of the drivetrain and, in some cases, the motor itself. Backdrivability may arise from the mechanical architecture of the drivetrain, motor characteristics, the transmission ratio, controller operation, or a combination of these factors. In practice, the desired level of backdrivability may be selected to balance ease of manual movement against control, safety and energy recovery.

The controller may actively participate in reducing drivetrain resistance during manual movement. For example, the controller may detect that the golf buggy is being pushed or pulled manually and transition one or more electric motors into a low-resistance operating state. Detection may occur by monitoring rotor movement, wheel speed, phase back-EMF, current behaviour, sensor inputs, accelerometers, inertial sensors, force sensors, strain sensors, handle-mounted sensors, frame-mounted sensors, wheel-mounted sensors, torque sensors, inertial measurement units (IMUs), or combinations thereof. Manual movement may be detected directly or indirectly.

Placing the motor in a low-resistance electrical state may reduce the electromagnetic or control-based effects that would otherwise oppose wheel rotation. For example, the controller may reduce commanded current, electrically decouple motor windings, open phase bridges, reduce commanded torque, disable holding torque, reduce braking torque, mitigate electromagnetic locking behaviour, control phase-lock states, or control braking functionality and/or electronic braking functionality. These measures may allow the one or more electric motors to remain mechanically coupled to the one or more wheels while reducing the effort required for manual movement. In other implementations, the controller does not actively place the motor into a low-resistance state, but instead ceases supplying current and avoids applying drive torque, holding torque, braking torque or locking torque.

In some embodiments, the one or more electric motors may remain electrically connected to the controller, battery system and/or power system during manual movement, while the controller operates the motors in a reduced-resistance operating state.

In some implementations, the controller may control parking brake functionality and/or electronic park brake functionality associated with the drivetrain. The parking brake may be applied, released, disabled, or otherwise controlled depending on the operating state of the golf buggy. For example, it may be desirable to release or mitigate a parking brake function when the user wishes to move the golf buggy manually, while retaining the ability to apply the parking brake when the golf buggy is stationary or on sloping terrain.

This parking brake control is not essential to every implementation, but provides support for future versions in which a parking brake or electronic park brake forms part of the drivetrain control architecture. In such versions, the parking brake may cooperate with motor torque control, electromagnetic locking control and/or one-way drive mechanisms to provide both safety and reduced-resistance manual movement.

Maintaining mechanical coupling between the motor and wheel while reducing resistance can be advantageous because the drivetrain does not need to be physically disconnected before manual movement. This can simplify the user experience during a round of golf, where a user may frequently transition between powered assistance and manual pushing. It may also reduce the number of mechanical components required compared with systems that rely on separate disengagement levers or linkages.

Manual movement of the golf buggy may backdrive one or more electric motors in at least one direction and/or at least one engagement state. Where backdriving occurs, the electric motor may generate electrical energy. That generated energy may be directed to recharge a battery or other energy storage device, may power one or more auxiliary components, or may simply be dissipated depending on the electrical configuration of the system.

Electrical energy generation and battery charging should not be regarded as synonymous.

Backdriving of an electric motor may generate electrical energy without necessarily resulting in charging of an energy storage device.

Whether charging occurs may depend on one or more charging conditions, including generated voltage, generated current, battery voltage, state of charge of the energy storage device, charge management circuitry, power electronics, operating conditions and drivetrain speed. For example, charging may occur only when generated voltage exceeds a voltage of the energy storage device and/or generated current satisfies a charging threshold.

In some implementations, generated electrical energy powers one or more auxiliary components without materially charging the energy storage device.

Generated electrical energy may be insufficient to charge an energy storage device but sufficient to power or momentarily activate an auxiliary component, such as an indicator light or control circuit.

Electrical generation need not occur during all manual movement. In some arrangements, manual movement in one direction and/or engagement state may mechanically decouple one or more electric motors from one or more wheels, while movement in another direction or engagement state may backdrive the motor. This distinction is useful because it allows the drivetrain to provide low-effort freewheel behaviour in one operating condition while still enabling energy recovery in another.

Auxiliary components powered by generated energy may include indicator lights, displays, communication modules, wireless transceivers, sensors, processors, control circuitry, GPS modules, haptic feedback devices, audio devices, or combinations thereof. For example, an indicator light may provide a visible indication that the golf buggy is in manual-movement mode, that energy recovery is occurring, or that a particular drive or brake state has been selected. Auxiliary components may additionally include wireless communication devices, Bluetooth transceivers, positioning modules, GNSS modules, microcontrollers, processors, memory devices, telemetry systems, data logging systems, user-interface devices, or combinations thereof.

In some embodiments, selection and/or enabling of the manual-movement mode may occur through operation and/or release of a parking brake arrangement. The parking brake arrangement may comprise a manually operable parking brake, an electronic parking brake, or a combination thereof.

In some embodiments, release of the parking brake may permit reduced-resistance manual pushing or pulling of the golf buggy without requiring disengagement of the motor drive arrangement.

The drivetrain behaviour may differ depending on engagement state. One engagement state may permit substantially free wheel rotation with minimal motor backdriving. Another engagement state may backdrive the motor and optionally permit electrical energy generation. A further engagement state may permit powered drive. The engagement state may be selected electronically, mechanically, or through a combination of electronic and mechanical control.

The drivetrain may support multiple operating states.

Example operating states may include: (a) powered drive operation; (b) engaged manual movement; (c) freewheel operation; (d) parking brake operation; (e) energy recovery operation; (f) decoupled freewheel operation; and (g) combinations thereof.

The engagement state associated with each operating mode may differ.

A one-way drive mechanism may be associated with the motor and/or wheel and may, for example, be arranged between the motor and wheel. The one-way drive mechanism may be positioned in a wheel hub, associated with a wheel hub, positioned on a motor shaft, incorporated within or adjacent a gearbox, incorporated within a transmission stage, associated with an axle, or positioned elsewhere in the torque path. This flexibility is useful because packaging constraints in golf buggies may vary significantly between product designs.

In one implementation, the one-way drive mechanism comprises one or more one-way drive mechanisms positioned within one or more rear wheel hubs. In a particular implementation, respective one-way drive mechanisms are positioned within left and right rear wheel hubs. This arrangement may allow the rear wheels to overrun or freewheel during forward manual movement while permitting torque transmission during powered operation.

In some implementations, the respective one-way drive mechanisms positioned within the left and right rear wheel hubs permit forward manual movement with reduced backdriving of the axle, gearbox and/or electric motor, while reverse manual movement may backdrive the axle, gearbox and/or electric motor.

The one-way drive mechanism may transmit torque during powered operation while permitting overrunning or reduced-resistance wheel rotation during manual movement. In this way, the same drivetrain can provide powered assistance when desired while also allowing the user to move the golf buggy manually without the drag that would otherwise arise from the motor and gearbox.

Suitable one-way drive mechanisms may include one-way needle bearing clutches, sprag clutches, roller clutches, overrunning clutches, ratchet mechanisms, pawl arrangements, wrap-spring clutches, torsion spring clutches, or combinations thereof. The choice of mechanism may depend on torque capacity, engagement smoothness, cost, size, durability, noise, sealing requirements and directionality of freewheel behaviour. Overrunning clutches, freewheel clutches, bicycle-style freewheel mechanisms and functionally equivalent directional torque-transmission arrangements may also be employed.

The one-way drive mechanism may operate automatically without user intervention. The one-way drive mechanism may transition between engagement and overrunning states in response to torque direction, rotational direction, speed differential, load conditions, wheel speed, axle speed, motor speed and/or drivetrain state.

A one-way needle bearing clutch or sprag clutch may include rollers or sprags positioned between inner and outer races. Powered rotation may wedge the rollers or sprags to engage the races for torque transmission, while manual movement in another direction may release the rollers or sprags to permit reduced-resistance rotation. These mechanisms can provide compact, robust torque transmission suitable for integration into a wheel hub or transmission stage.

A pin-and-slot arrangement may be used to provide selective engagement or disengagement of a drive component. For example, a pin may engage one of a plurality of slots formed in a wheel hub to couple the drivetrain during powered operation and may move to another position to permit reduced-resistance movement. This type of arrangement may be useful where a simple mechanical indication or user-selectable engagement state is desired.

A roller clutch, ratchet mechanism or pawl arrangement may be selected where positive mechanical engagement is desired in one direction and release is desired in another. Pawls may be spring-biased or otherwise urged toward an engagement position. Ramps, cams or tooth profiles may be selected to tune engagement force, noise, durability and release behaviour.

A wrap-spring clutch may comprise a coil spring arranged around one or more cylindrical hubs or drums. Rotation in one direction may tighten the spring so that torque is transmitted between the hubs or drums. Relative rotation in another direction may loosen the spring and permit reduced-resistance movement. This can provide a compact way to achieve directional torque transmission and may be useful where smooth engagement is desirable.

The wrap-spring clutch may comprise a single-wrap or multi-wrap spring arrangement. Spring geometry, preload, material selection and surface finish may be selected based on desired torque capacity, engagement smoothness, durability, wear resistance and packaging requirements. A torsion spring clutch may operate according to similar principles and may be configured to engage or release depending on direction of relative rotation.

Multiple one-way drive mechanisms may be combined within a single drivetrain arrangement. For example, a wrap-spring clutch may be combined with a sprag clutch or roller clutch to tailor torque transmission, directionality, engagement smoothness, resistance characteristics or backdrivability. This provides support for future implementations in which different mechanisms cooperate to achieve the desired powered/manual transition behaviour.

One-way drive mechanisms may also cooperate with controller-based resistance reduction strategies. For example, the controller may reduce electromagnetic resistance generated by the motor while the one-way drive mechanism mechanically permits overrunning or reduced-resistance wheel movement. This combined approach may reduce the load on either mechanism alone and may allow smoother transition between powered and manual operation.

The golf buggy may include a battery pack configured to power the motor and controller. A wiring harness may connect the battery, controller, power electronics, motor, sensors, user interface and auxiliary components. The controller may comprise a printed circuit board incorporating motor drive electronics, power management circuitry, communication circuitry, sensor inputs and processing circuitry.

The controller may respond to a STOP command in different ways depending on the selected mode and drivetrain configuration. In one example, the controller cuts torque produced by one or more electric motors to zero. In another example, the controller places one or more electric motors and/or the drivetrain into the manual-movement mode. In a further example, the controller applies, releases, disables, or otherwise controls parking brake functionality or electronic park brake functionality.

These STOP-command responses may be used individually or together. For example, a STOP command may first cut motor torque to zero and then place the drivetrain into a reduced-resistance state. In another operating condition, the STOP command may maintain or apply a parking brake if the golf buggy is on a slope. In a further operating condition, the STOP command may release or disable a parking brake to allow manual repositioning of the golf buggy.

In some implementations, receipt of a STOP command results in cessation of motor drive without application of braking torque, holding torque or locking functionality.

In some embodiments, the golf buggy may comprise a parking brake. The parking brake may comprise a manually operable parking brake, an electronically controlled parking brake, or a combination thereof.

In some embodiments, the controller may control, assist, coordinate with, enable, or otherwise interact with operation of the parking brake. In other embodiments, the parking brake may be manually actuated independently of the controller.

A user-selectable manual-movement mode may be provided to give the user direct control over whether the golf buggy behaves as a powered golf buggy or as a manually movable pushcart. Selection may occur electronically, mechanically, or through a combination of both. Electronic selection may occur through a controller mode, button, switch, remote-control input, application interface, software command or wireless communication device.

Mechanical selection may occur through a wheel engagement position, freewheel position, clutch engagement arrangement, hub-mounted actuator or related selector. Mechanical selection may be useful where a simple, visible and robust manual override is desired. Electronic selection may be useful where integration with the motor controller, remote-control functions, software modes or sensor-based operation is desired. Mechanical selection may also occur through operation and/or release of a parking brake arrangement.

Some implementations may include both electronic and mechanical selection mechanisms. This can provide redundancy and user flexibility. For example, a user may normally select manual-movement mode through a handle-mounted button or controller mode, but a hub-mounted actuator may be provided as a mechanical option for service, storage, transport or battery-depleted operating conditions.

In some implementations, no user selection of a manual-movement mode is required, and reduced-resistance manual movement occurs automatically when the user pushes and/or pulls the golf buggy. Therefore, reduced-resistance manual movement may occur automatically without requiring a user to select a dedicated operating mode.

The user interface may comprise integrated push-buttons configured to control ON/OFF functions, speed control, operating modes and/or drivetrain settings. Alternative user interfaces may include separate buttons, levers, touch-sensitive controls, remote-control devices, wearable interfaces, smartphone applications or combinations thereof.

The disclosed arrangements may be particularly beneficial for users who prefer to walk the golf course but selectively utilise powered assistance under particular operating conditions, such as on hilly terrain, during long rounds, or when fatigue occurs. In these circumstances, the ability to move between powered assistance and manual pushing without operating a mechanical disengagement linkage can make the golf buggy feel more natural and convenient to use.

The disclosed arrangements may also improve manoeuvrability in confined spaces, during loading and unloading, when parking the golf buggy, when navigating paths or clubhouse areas, and when battery charge is depleted. Reduced-resistance manual movement can therefore improve both convenience and reliability, while reducing the risk that the golf buggy becomes difficult to move when powered assistance is unavailable.

Forward and reverse manual movement may exhibit different resistance characteristics. In some implementations, forward manual movement is associated with reduced resistance due to overrunning or freewheel behaviour, while reverse manual movement is associated with greater resistance due to engagement of at least part of the drivetrain and backdriving of one or more drivetrain components.

The resistance encountered during manual movement in a first direction may differ from the resistance encountered during manual movement in a second direction. The difference may arise from one-way drive mechanism behaviour, gearbox behaviour, drivetrain architecture, controller behaviour, motor characteristics, engagement state, or combinations thereof.

The drivetrain system may be configured as a modular assembly capable of incorporation into new golf buggy designs or retrofitting into existing golf buggy platforms. A modular arrangement may include the motor, controller, drive mechanism, wheel hub components, wiring harness and associated sensors or user interface components.

Although described primarily in relation to golf buggies, the drivetrain systems and methods may also be applied to other manually operable vehicles or carts where transition between powered and manual movement is desirable. Examples include luggage carts, hospital trolleys, industrial carts, mobility devices, strollers, personal transport systems and related manually operable vehicles.

A method of operating the golf buggy may comprise driving one or more wheels using one or more electric motors during powered operation and manually moving the golf buggy when the one or more electric motors are unpowered, not actively driving, or otherwise operating in a manner that permits reduced-resistance manual movement. During manual movement, resistance associated with operation of the one or more electric motors may be reduced while the one or more electric motors remain mechanically coupled to the one or more wheels. This allows the golf buggy to be pushed or pulled manually with reduced resistance without requiring the user to disengage the drivetrain manually.

The reduction in resistance may be achieved electronically through controller operation, mechanically through operation of a one-way drive mechanism, or through a combination of electronic and mechanical arrangements. In this way, the method supports controller-only, mechanical-only and hybrid approaches.

The method may further comprise generating electrical energy during manual movement where the motor is backdriven. Generated electrical energy may, where electrical conditions permit, be directed to recharge an energy storage device and/or power one or more auxiliary components. Energy generation may occur only in selected directions or engagement states, depending on whether manual movement backdrives the motor.

The method may further comprise selecting a manual-movement mode electronically and/or mechanically. The method may also comprise receiving a STOP command and transitioning the drivetrain into a reduced-resistance operating state, optionally together with controlling braking, locking, parking brake or electronic park brake functionality.

In some implementations, the method comprises permitting manual movement in a first direction with overrunning of at least part of the drivetrain and reduced backdriving of one or more electric motors.

In some implementations, the method comprises manual movement in a second direction that backdrives at least part of the drivetrain and/or one or more electric motors.

In some implementations, the first and second directions exhibit different resistance characteristics.

In some implementations, backdriving in the second direction generates electrical energy, and the generated electrical energy may be used to power an auxiliary component, charge an energy storage device where electrical conditions permit, or be dissipated.

In some implementations, manual movement in a first direction permits overrunning of one or more wheels relative to at least part of the drivetrain, while manual movement in a second direction backdrives at least part of the drivetrain.

The disclosed arrangements provide a number of technical effects and practical benefits. Controller-implemented manual-movement modes can reduce resistance associated with operation of one or more electric motors while maintaining mechanical coupling between the motor and drivetrain. One-way drive mechanisms can reduce drivetrain resistance while preserving effective torque transmission during powered operation. Hybrid arrangements can provide a balance between the two approaches.

Parking brake control functionality may improve safety while still permitting reduced-resistance manual movement when appropriate. For example, braking or holding functions may be maintained on sloping terrain but released or mitigated when the user intends to push or pull the golf buggy manually.

Energy generated during manual movement may, where electrical conditions permit, be recovered to recharge a battery and/or power auxiliary components. This may improve overall system efficiency and provide useful functionality, such as powering an indicator or control circuit, even when the golf buggy is being moved manually.

The disclosed arrangements may simplify construction by reducing or eliminating manual disengagement linkages. This can reduce component count, reduce manufacturing and maintenance costs, improve reliability, and make the golf buggy easier for users to operate.

Unless the context clearly requires otherwise, features described in relation to one implementation may be combined with features described in relation to another implementation. For example, controller-based resistance reduction strategies may be combined with one-way drive mechanisms, backdrivable motor configurations, regenerative charging arrangements, parking brake control functions, user-selectable manual-movement modes, transmission architectures, drivetrain arrangements, hub-mounted actuators and/or remote-control functions in any technically compatible combination.

In some implementations, reduced resistance during manual movement is achieved primarily through controller operation, including by placing one or more electric motors into a low-resistance electrical state, electrically decoupling motor windings, reducing commanded torque, mitigating electromagnetic locking behaviour, controlling phase-lock states, controlling braking functionality, and/or controlling parking brake or electronic park brake functionality.

In other implementations, reduced resistance during manual movement is achieved primarily through operation of a one-way drive mechanism. Suitable one-way drive mechanisms may include one-way needle bearing clutches, sprag clutches, roller clutches, wrap-spring clutches, torsion spring clutches, ratchet mechanisms, overrunning mechanisms, or combinations thereof.

In further implementations, controller-based resistance reduction strategies cooperate with one-way drive mechanisms so that the controller reduces motor-generated resistance while the one-way drive mechanism mechanically permits overrunning or reduced-resistance wheel movement.

In some implementations, controller-based resistance reduction is not required because reduced-resistance manual movement is achieved substantially by drivetrain architecture.

Depending on drivetrain configuration, manual movement of the golf buggy may backdrive one or more electric motors in at least one direction and/or engagement state. Electrical energy generated during backdriving may, where one or more charging conditions are satisfied, be directed to recharge an energy storage device and/or power one or more auxiliary components.

In some implementations, reduced-resistance manual movement is achieved predominantly through operation of a one-way drive mechanism, freewheel mechanism and/or overrunning mechanism, while the controller merely avoids applying drive torque, braking torque, holding torque, locking torque and/or parking brake torque.

In some configurations, the auxiliary component comprises an indicator light, display, communication module, wireless communication module, sensor, processor, control circuitry, GPS module, haptic feedback device, or audio device.

The manual-movement mode may be selectable electronically, mechanically, or through combinations thereof. Selection may occur through controller modes, buttons, switches, software commands, wheel engagement positions, freewheel positions, clutch engagement arrangements, hub-mounted actuators, remote-control inputs, application interfaces, or combinations thereof.

In some operating conditions, the controller responds to a STOP command by cutting torque produced by the motor to zero, placing the drivetrain into the manual-movement mode, controlling braking functionality, controlling parking brake functionality, controlling electronic park brake functionality, or combinations thereof.

In certain implementations, the drivetrain remains mechanically coupled during both powered and manual movement, such that transition between operating modes occurs without requiring manual disengagement of the motor from the wheel.

In some embodiments, the golf buggy and/or drivetrain system may further comprise a manually operable parking brake configured to selectively resist movement of the golf buggy.

The manually operable parking brake may be releasable to permit manual pushing and/or pulling of the golf buggy.

In other embodiments, a single motor may drive multiple driven wheels through a shared axle, gearbox, transmission or other common drive arrangement.

In some embodiments, the controller may independently control respective electric motors associated with respective driven wheels.

In some embodiments, independently controlled driven wheels may provide differential drive functionality and/or assist manoeuvrability of the golf buggy.

In some implementations, the driven wheels comprise left and right rear driven wheels. Respective one-way drive mechanisms may be associated with the left and right rear driven wheels.

In some implementations, the respective one-way drive mechanisms are direction-specific or side-specific. For example, a left-side one-way drive mechanism may be configured for installation on a left rear driven wheel, and a right-side one-way drive mechanism may be configured for installation on a right rear driven wheel. In such implementations, incorrect installation or reversal of the left-side and right-side one-way drive mechanisms may affect the intended torque-transmission and overrunning behaviour.

In other implementations, the respective one-way drive mechanisms may be configured to be installed interchangeably on left and right rear driven wheels while still providing the intended torque-transmission and overrunning behaviour.

In some embodiments, the golf buggy may comprise left and right driven wheels.

Each driven wheel may comprise a respective electric motor, including a respective hub motor arrangement.

Each driven wheel may further comprise a respective one-way drive mechanism associated with the corresponding wheel and/or motor arrangement.

In some embodiments, the respective motors and/or one-way drive mechanisms may operate independently.

The presently contemplated commercial implementation represents only one example of the disclosed principles and should not be regarded as limiting.

The disclosed systems, methods and drivetrain arrangements may be implemented using controller-only architectures, mechanical-only architectures, or hybrid electro-mechanical architectures depending on the desired balance between cost, performance, controllability, efficiency, safety, manufacturability, user experience, and intended commercial application.

The disclosure intentionally encompasses controller-dominant architectures, drivetrain-dominant architectures and hybrid architectures.

Future product generations may employ different combinations of motors, gearboxes, one-way drive mechanisms, controller strategies, energy recovery arrangements, parking brake systems, communication systems and sensor systems without departing from the principles disclosed herein.

Features described in relation to one implementation may be combined with features described in relation to another implementation in any technically compatible manner. For example, different motor types, gearbox arrangements, one-way drive mechanisms, parking brake systems, regeneration strategies, engagement states, user-selection mechanisms, controller strategies, and auxiliary component arrangements may be used together in any technically compatible combination.

The embodiments and variations described above are provided as an indication of the utility and versatility of the present invention. Other embodiments that do not provide or otherwise utilise all of the features, methods and advantages set forth herein may also be utilised, without departing from the spirit and scope of the present invention. Such modifications and variations are considered to be within the scope of the principles of the invention as defined by the claims set forth below.

The invention will now be described with reference to the following clauses:
1. A golf buggy comprising: (a) a frame configured to support golf equipment; (b) at least one wheel coupled to the frame; and (c) one or more electric motors operatively coupled to drive one or more of the at least one wheel, wherein, during manual movement of the golf buggy by a user while the one or more electric motors are unpowered, not actively driving the one or more wheels, or otherwise operating in a manner that permits reduced-resistance manual movement of the golf buggy: (i) resistance associated with operation of the one or more electric motors is reduced so as to allow the golf buggy to be pushed and/or pulled manually with reduced resistance, the reduced resistance being achieved by: (aa) operation of a controller configured to control the one or more electric motors; (bb) a drive mechanism associated with the one or more electric motors and/or the one or more wheels; or (cc) a combination thereof; and (ii) manual disengagement of the one or more electric motors from the one or more wheels is not required.
2. The golf buggy of clause 1, wherein the controller reduces resistive torque by placing the one or more electric motors in a low-resistance electrical state.
3. The golf buggy of clause 2, wherein the low-resistance electrical state comprises electrically decoupling the windings of the one or more electric motors.
4. The golf buggy of any one of clauses 1 to 3, wherein the controller reduces resistive torque by disabling and/or mitigating holding torque, braking torque, parking brake functionality, electronic park brake functionality, phase-locking resistance, electromagnetic locking functionality, or combinations thereof.
5. The golf buggy of clause 4, wherein, during manual movement, the controller ceases supplying current to the one or more electric motors such that the controller does not apply drive torque, holding torque or braking torque.
6. The golf buggy of any one of clauses 1 to 5, wherein the controller detects manual movement of the golf buggy and automatically transitions the one or more electric motors into the manual-movement mode.
7. The golf buggy of clause 6, wherein manual movement in a first direction permits overrunning of at least part of the drivetrain and manual movement in a second direction backdrives at least part of the drivetrain.
8. The golf buggy of clause 6 or 7, wherein the controller detects manual movement based on one or more of: (a) rotation of the one or more wheels; (b) rotational speed of the one or more electric motors; (c) back-EMF generated by the one or more electric motors; (d) a force applied to the golf buggy; (e) torque and/or strain within the golf buggy; or (f) signals from one or more motion, force and/or inertial sensors.
9. The golf buggy of clause 8, wherein the one or more motion, force and/or inertial sensors comprise one or more accelerometers, gyroscopes, inertial measurement units (IMUs), force sensors and/or strain sensors.
10. The golf buggy of any one of clauses 1 to 9, wherein: (a) manual movement of the golf buggy in a first direction permits overrunning of at least part of the drive mechanism with reduced backdriving of the one or more electric motors; and (b) manual movement in a second direction and/or engagement state backdrives the one or more electric motors.
11. The golf buggy of clause 10, wherein electrical energy generated by backdriving the one or more electric motors during manual movement in the second direction is directed to charge an energy storage device when one or more charging conditions are satisfied.
12. The golf buggy of clause 11, wherein the one or more charging conditions comprise generated voltage exceeding a voltage of the energy storage device and/or generated current satisfying a charging threshold.
13. The golf buggy of any one of clauses 10 to 12, wherein electrical energy generation occurs during manual movement of the golf buggy in the second direction and/or during an engagement state that backdrives the one or more electric motors.
14. The golf buggy of any one of clauses 1 to 13, wherein the golf buggy further comprises a parking brake, optionally comprising a manually operable parking brake and/or an electronic park brake, and wherein, upon receipt of a STOP command, the controller: (a) cuts torque produced by the one or more electric motors to zero; (b) places the one or more electric motors in the manual-movement mode; (c) controls operation of the parking brake and/or coordinates operation with the parking brake; or (d) performs any combination of (a) to (c).
15. The golf buggy of any one of clauses 1 to 14, wherein the golf buggy comprises a user-selectable manual-movement mode.
16. The golf buggy of clause 15, wherein the manual-movement mode is selectable electronically and/or mechanically.
17. The golf buggy of clause 16, wherein the manual-movement mode is selectable by: (a) a button or switch; (b) a controller mode; (c) a wheel engagement position; (d) a freewheel position; (e) a clutch engagement arrangement; (f) a parking brake actuator and/or parking brake release arrangement; or (g) combinations thereof.
18. The golf buggy of any one of clauses 1 to 17, wherein the drive mechanism comprises a one-way drive mechanism associated with the one or more electric motors and/or the one or more wheels.
19. The golf buggy of clause 18, wherein the one-way drive mechanism is integrated with, positioned within, or adjacent to a wheel hub, drivetrain, transmission, and/or in-hub motor arrangement.
20. The golf buggy of clause 19, wherein the one-way drive mechanism comprises one or more one-way drive mechanisms positioned within one or more rear wheel hubs.
21. The golf buggy of clause 20, wherein the one or more one-way drive mechanisms comprise respective one-way drive mechanisms positioned within left and right rear wheel hubs.
22. The golf buggy of any one of clauses 18 to 21, wherein the one-way drive mechanism comprises: (a) a one-way needle bearing clutch; (b) a sprag clutch; (c) a roller clutch; (d) a wrap-spring clutch; (e) a torsion spring clutch; (f) a ratchet mechanism; (g) a freewheel mechanism; (h) an overrunning mechanism; or (i) combinations thereof.
23. The golf buggy of any one of clauses 18 to 22, wherein the one-way drive mechanism automatically transitions between engagement and overrunning states without user intervention.
24. The golf buggy of any one of clauses 1 to 23, wherein reduced resistance during manual movement is achieved substantially entirely by the one-way drive mechanism or is achieved by operation of the one-way drive mechanism and operation of the controller.
25. The golf buggy of any one of clauses 1 to 24, wherein reduced resistance during manual movement is achieved: (a) without use of a one-way drive mechanism; or (b) substantially entirely by controller operation.
26. The golf buggy of any one of clauses 1 to 25, wherein manual movement of the golf buggy generates electrical energy that powers an auxiliary component.
27. The golf buggy of any one of clauses 1 to 26, wherein a single electric motor drives a plurality of wheels through a shared axle, gearbox and/or transmission arrangement.
28. The golf buggy of clause 27, wherein the gearbox comprises a worm gear and worm wheel arrangement.
29. The golf buggy of clause 28, wherein the worm gear and worm wheel arrangement comprises a dual-start or multi-start worm.
30. The golf buggy of clause 28 or 29, wherein the gearbox has a reduction ratio of about 15:1 to about 40:1, optionally about 20:1 to about 30:1, further optionally about 25:1.
31. The golf buggy of clause 26, wherein the auxiliary component comprises an indicator light, display, communication module, sensor, control circuitry, or combinations thereof.
32. The golf buggy of clause 31, wherein the auxiliary component comprises one or more wireless communication modules, transceivers, positioning modules, processors, microcontrollers, sensors, control electronics, or combinations thereof.
33. The golf buggy of any one of clauses 1 to 32, wherein the one or more electric motors remain electrically connected to the controller and/or a power source during the manual-movement mode.
34. The golf buggy of any one of clauses 1 to 33, wherein the one or more electric motors comprise: (a) one or more hub motors; (b) one or more brushless motors; or (c) one or more permanent magnet motors, including one or more brushless permanent magnet motors; and/or (d) combinations thereof.
35. A method of operating a golf buggy comprising one or more electric motors operatively coupled to drive one or more wheels, the method comprising: (a) driving the one or more wheels using the one or more electric motors during a powered operating mode; and (b) during manual movement of the golf buggy, reducing resistance associated with operation of the one or more electric motors while the one or more electric motors remain mechanically coupled to the one or more wheels, thereby allowing the golf buggy to be pushed and/or pulled manually with reduced resistance, wherein the reduced resistance is achieved by: (aa) operation of a controller configured to control the one or more electric motors; (bb) a drive mechanism associated with the one or more electric motors and/or the one or more wheels; or (cc) a combination thereof.
36. The method of clause 35, wherein: (a) manual movement in a first direction permits overrunning of at least part of the drive mechanism with reduced backdriving of the one or more electric motors; and (b) manual movement in a second direction and/or engagement state backdrives the one or more electric motors.
37. A drivetrain system for a golf buggy, the system comprising: (a) one or more electric motors configured to drive one or more wheels of the golf buggy; (b) a controller configured to control operation of the one or more electric motors; and (c) a drive mechanism associated with the one or more electric motors and the one or more wheels, wherein the controller and/or the drive mechanism are configured to implement a manual-movement mode in which: (i) the one or more electric motors remain mechanically coupled to the one or more wheels; and (ii) resistance associated with operation of the one or more electric motors is reduced during manual movement of the golf buggy.
38. The drivetrain system of clause 37, wherein the drive mechanism comprises a one-way drive mechanism.
39. The drivetrain system of clause 38, wherein the one-way drive mechanism comprises: (a) a one-way needle bearing clutch; (b) a sprag clutch; (c) a roller clutch; (d) a wrap-spring clutch; (e) a torsion spring clutch; (f) a ratchet mechanism; (g) a freewheel mechanism; (h) an overrunning mechanism; or (i) combinations thereof.
40. The drivetrain system of any one of clauses 37 to 39, further comprising a manually operable parking brake configured to selectively resist movement of the golf buggy, wherein the manually operable parking brake is releasable to permit manual pushing and/or pulling of the golf buggy.
41. The drivetrain system of any one of clauses 37 to 40, wherein: (a) the one or more electric motors comprise one or more hub motors, one or more brushless motors, one or more permanent magnet motors, including one or more brushless permanent magnet motors, and/or combinations thereof; and (b) respective driven wheels comprise respective one-way drive mechanisms associated with the respective driven wheels and/or the one or more electric motors.
42. The drivetrain system of clause 41, wherein the respective driven wheels comprise left and right rear driven wheels, and wherein the respective one-way drive mechanisms are associated with the left and right rear driven wheels.
43. The drivetrain system of clause 42, wherein the respective one-way drive mechanisms comprise left-side and right-side one-way drive mechanisms having different installation orientations.
44. The drivetrain system of clause 42, wherein the respective one-way drive mechanisms are configured to be installed interchangeably on the left and right rear driven wheels.

## Claims

1. A golf buggy comprising:
(a) a frame configured to support golf equipment;
(b) at least one wheel coupled to the frame; and
(c) one or more electric motors operatively coupled to drive one or more of the at least one wheel,
wherein, during manual movement of the golf buggy by a user while the one or more electric motors are unpowered, not actively driving the one or more wheels, or otherwise operating in a manner that permits reduced-resistance manual movement of the golf buggy:
(i) resistance associated with operation of the one or more electric motors is reduced so as to allow the golf buggy to be pushed and/or pulled manually with reduced resistance, the reduced resistance being achieved by:
(aa) operation of a controller configured to control the one or more electric motors;
(bb) a drive mechanism associated with the one or more electric motors and/or the one or more wheels; or
(cc) a combination thereof; and
(ii) manual disengagement of the one or more electric motors from the one or more wheels is not required.

2. The golf buggy of claim 1, wherein, during manual movement, the controller ceases supplying current to the one or more electric motors such that the controller does not apply drive torque, holding torque or braking torque.

3. The golf buggy of claim 1 or 2, wherein manual movement in a first direction permits overrunning of at least part of the drivetrain and manual movement in a second direction backdrives at least part of the drivetrain.

4. The golf buggy of any one of claims 1 to 3, wherein:
(a) manual movement of the golf buggy in a first direction permits overrunning of at least part of the drive mechanism with reduced backdriving of the one or more electric motors; and
(b) manual movement in a second direction and/or engagement state backdrives the one or more electric motors.

5. The golf buggy of claim 4, wherein electrical energy generated by backdriving the one or more electric motors during manual movement in the second direction is directed to charge an energy storage device when one or more charging conditions are satisfied.

6. The golf buggy of any one of claims 1 to 5, wherein the drive mechanism comprises a one-way drive mechanism associated with the one or more electric motors and/or the one or more wheels.

7. The golf buggy of claim 6, wherein the one-way drive mechanism comprises one or more one-way drive mechanisms positioned within one or more rear wheel hubs, optionally wherein the one or more one-way drive mechanisms comprise respective one-way drive mechanisms positioned within left and right rear wheel hubs.

8. The golf buggy of claim 6 or 7, wherein the one-way drive mechanism comprises:
(a) a one-way needle bearing clutch;
(b) a sprag clutch;
(c) a roller clutch;
(d) a wrap-spring clutch;
(e) a torsion spring clutch;
(f) a ratchet mechanism;
(g) a freewheel mechanism;
(h) an overrunning mechanism; or
(i) combinations thereof; optionally wherein the one-way drive mechanism automatically transitions between engagement and overrunning states without user intervention.

9. The golf buggy of any one of claims 1 to 8, wherein reduced resistance during manual movement is achieved substantially entirely by the one-way drive mechanism or is achieved by operation of the one-way drive mechanism and operation of the controller.

10. The golf buggy of any one of claims 1 to 9, wherein a single electric motor drives a plurality of wheels through a shared axle, gearbox and/or transmission arrangement.

11. The golf buggy of claim 10, wherein the gearbox comprises a worm gear and worm wheel arrangement, optionally wherein the worm gear and worm wheel arrangement comprises a dual-start or multi-start worm, and wherein the gearbox has a reduction ratio of about 15:1 to about 40:1, optionally about 20:1 to about 30:1, further optionally about 25:1.

12. The golf buggy of any one of claims 1 to 11, wherein the one or more electric motors comprise:
(a) one or more hub motors;
(b) one or more brushless motors; or
(c) one or more permanent magnet motors, including one or more brushless permanent magnet motors; and/or
(d) combinations thereof.

13. A method of operating a golf buggy comprising one or more electric motors operatively coupled to drive one or more wheels, the method comprising:
(a) driving the one or more wheels using the one or more electric motors during a powered operating mode; and
(b) during manual movement of the golf buggy, reducing resistance associated with operation of the one or more electric motors while the one or more electric motors remain mechanically coupled to the one or more wheels, thereby allowing the golf buggy to be pushed and/or pulled manually with reduced resistance,
wherein the reduced resistance is achieved by:
(aa) operation of a controller configured to control the one or more electric motors;
(bb) a drive mechanism associated with the one or more electric motors and/or the one or more wheels; or
(cc) a combination thereof.

14. The method of claim 13, wherein:
(a) manual movement in a first direction permits overrunning of at least part of the drive mechanism with reduced backdriving of the one or more electric motors; and
(b) manual movement in a second direction and/or engagement state backdrives the one or more electric motors.

15. A drivetrain system for a golf buggy, the system comprising:
(a) one or more electric motors configured to drive one or more wheels of the golf buggy;
(b) a controller configured to control operation of the one or more electric motors; and
(c) a drive mechanism associated with the one or more electric motors and the one or more wheels,
wherein the controller and/or the drive mechanism are configured to implement a manual-movement mode in which:
(i) the one or more electric motors remain mechanically coupled to the one or more wheels; and
(ii) resistance associated with operation of the one or more electric motors is reduced during manual movement of the golf buggy.
